# FASCICULE DE BREVET EUROPEEN

(11) **EP 0 949 104 B1**
(45) Date de publication et mention de la délivrance du brevet: **27.02.2002**
(21) Numéro de dépôt: 99400848.0
(22) Date de dépôt: 07.04.1999
(51) Int. Cl.: B60J 7/20

(54) **Malle arrière pour véhicule découvrable à toit repliable, cette malle pouvant s'ouvrir de l'arrière vers l'avant et de l'avant vers l'arrière**
Kofferraum für Cabriofahrzeug mit Faltverdeck, der Kofferraumdeckel kann von hinten nach vorne und von vorne nach hinten geöffnet werden
Rear trunk for convertible vehicle with foldable top, the trunk lid opening from the rear towards the front or from the front towards the rear

(30) Priorité: 09.04.1998 FR 9804476
(43) Date de publication de la demande: 13.10.1999
(73) Titulaire: France Design, 79140 Cerizay (FR)
(72) Inventeur: Queveau, Gérard, Le Pin, 79140 Cerizay (FR); Queveau, Paul, Montravers, 79140 Cerizay (FR); Guillez, Jean-Marc, Cirières, 79140 Cerizay (FR)
(74) Mandataire: Keib, Gérard

(56) Documents cités:
- US-A- 5 655 331

## Description

La présente invention concerne une malle arrière pour véhicule découvrable à toit repliable, comprenant des moyens permettant une ouverture de cette malle, d'une part, pour le passage et le rangement du toit replié dans le coffre arrière et, d'autre part, pour l'accès à ce coffre pour le rangement de bagages. Ces caractéristiques sont révélées par exemple dans le document US 5655331 A, et sont incluses dans le préambule de la revendication indépendante n°1.

Habituellement, la malle arrière d'un véhicule automobile s'ouvre de l'arrière vers l'avant, ce qui facilite le rangement des bagages.

Pour permettre le passage et le rangement du toit replié d'un véhicule découvrable, il est nécessaire de pouvoir ouvrir le coffre de l'avant vers l'arrière. Cependant, cette solution n'est pas commode pour le rangement des bagages.

Il a ainsi été proposé une malle arrière qui puisse s'ouvrir de l'arrière vers l'avant pour ranger les bagages et qui puisse s'ouvrir de l'avant vers l'arrière pour le passage et le rangement du toit replié du véhicule découvrable.

Cependant, la solution ci-dessus complique la réalisation de la malle arrière.

Le but de la présente invention est de créer une malle arrière de construction simple, permettant d'assurer les deux fonctions d'une manière optimale à savoir le passage et le rangement du toit replié et le rangement des bagages.

Suivant l'invention, cette malle arrière est caractérisée en ce que le bord avant de la malle et le bord arrière de cette dernière sont reliés à la carrosserie du véhicule au moyen de verrous ayant pour fonction soit le verrouillage soit l'articulation de la malle de façon que celle-ci puisse s'ouvrir soit de l'avant vers l'arrière soit de l'arrière vers l'avant.

Ainsi, lorsque la malle s'ouvre d'avant vers l'arrière pour le passage et le rangement du toit replié, les verrous adjacents au bord avant de la malle sont déverrouillés et les verrous adjacents au bord arrière de la malle sont verrouillés et permettent le pivotement de la malle.

Inversement, lorsque la malle s'ouvre de l'arrière vers l'avant pour le rangement de bagages, les verrous adjacents au bord avant de la malle sont verrouillés et permettent le pivotement de la malle, tandis que les verrous adjacents au bord arrière de la malle sont déverrouillés.

Selon une version avantageuse de l'invention, le bord avant et le bord arrière de la malle sont chacun reliés à la carrosserie au moyen d'une paire de verrous espacés, l'une des paires de verrous constituant une articulation en position de verrouillage tandis que l'autre paire de verrous est en position de déverrouillage et vice versa.

Selon une version préférée de l'invention, chaque verrou comprend d'une part un crochet fixé de façon articulée à un premier élément solidaire de la carrosserie et d'autre part un second élément solidaire de la malle, ledit crochet pouvant pivoter entre une première position dans laquelle il est en prise avec ledit second élément tout en permettant la rotation de celui-ci par rapport au crochet et audit premier élément et une seconde position dans laquelle ledit second élément est libre par rapport au crochet et audit premier élément.

De préférence, le pivotement du crochet entre lesdites première et seconde positions est commandé par un actionneur électrique, hydraulique ou pneumatique.

De préférence également, l'ouverture de la malle de l'avant vers l'arrière ou de l'arrière vers l'avant est commandée par un vérin électro-hydraulique ou hydro-pneumatique fixé de façon articulée d'une part à la malle, et d'autre part, à une partie de la carrosserie adjacente au fond du coffre.

D'autres particularités et avantages de l'invention apparaîtront encore dans la description ci-après.

Aux dessins annexés donnés à titre d'exemples non limitatifs :
- la figure 1 est une vue schématique en coupe longitudinale partielle d'un véhicule découvrable équipé d'une malle arrière conforme à l'invention ;
- la figure 2 est une vue suivant la flèche F de la figure 1, la malle étant fermée ;
- la figure 3 est une vue de côté montrant le détail d'un verrou ;
- la figure 4 est une vue suivant la flèche D de la figure 3.

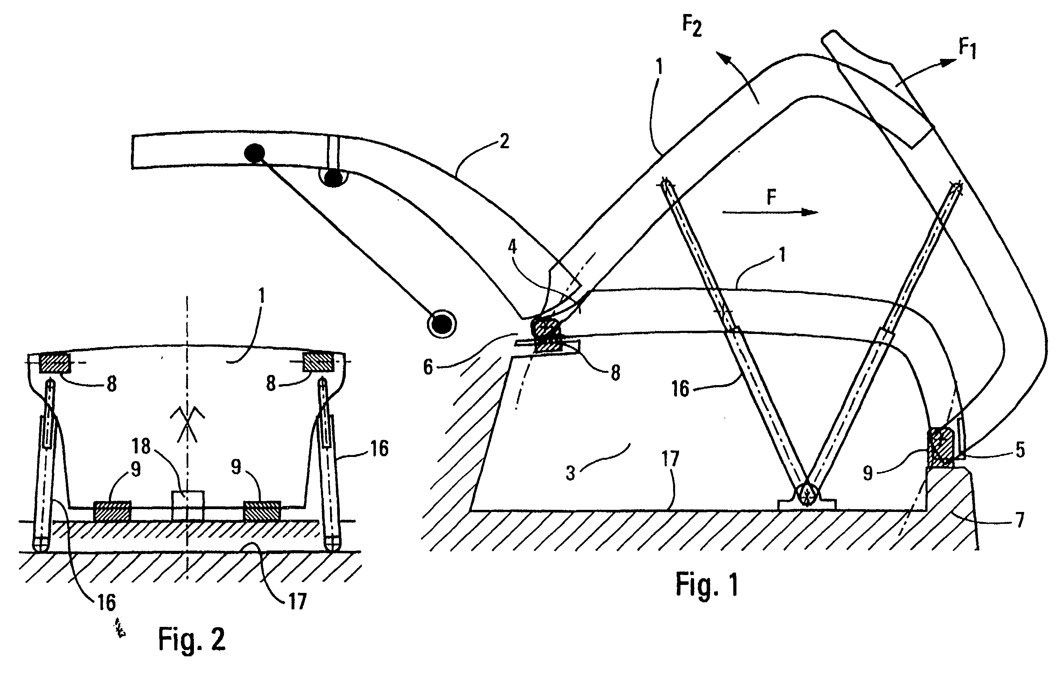

En référence à la figure 1, la malle arrière 1 pour véhicule découvrable à toit repliable 2 comprend des moyens pour ouvrir la malle 1 permettant d'une part le passage et le rangement du toit replié 2 à l'intérieur du coffre arrière 3 et d'autre part un accès du coffre par l'arrière pour le rangement de bagages.

Conformément à l'invention, le bord avant 4 de la malle 1 et le bord arrière 5 de cette dernière sont reliés à la carrosserie 6, 7 du véhicule au moyen de verrous 8, 9 ayant pour fonction soit le verrouillage, soit l'articulation de la malle 1 de façon que celle-ci puisse s'ouvrir soit de l'avant vers l'arrière (voir flèche F1), soit de l'arrière vers l'avant (voir flèche F2).

Comme montré par la figure 2, le bord avant 4 et le bord arrière de la malle 1 sont chacun reliés à la carrosserie au moyen d'une paire de verrous espacés 8, 9, l'une des paires de verrous 8, 9 constituant une articulation en position de verrouillage tandis que l'autre paire de verrous 8, 9 est en position de déverrouillage et vice versa.

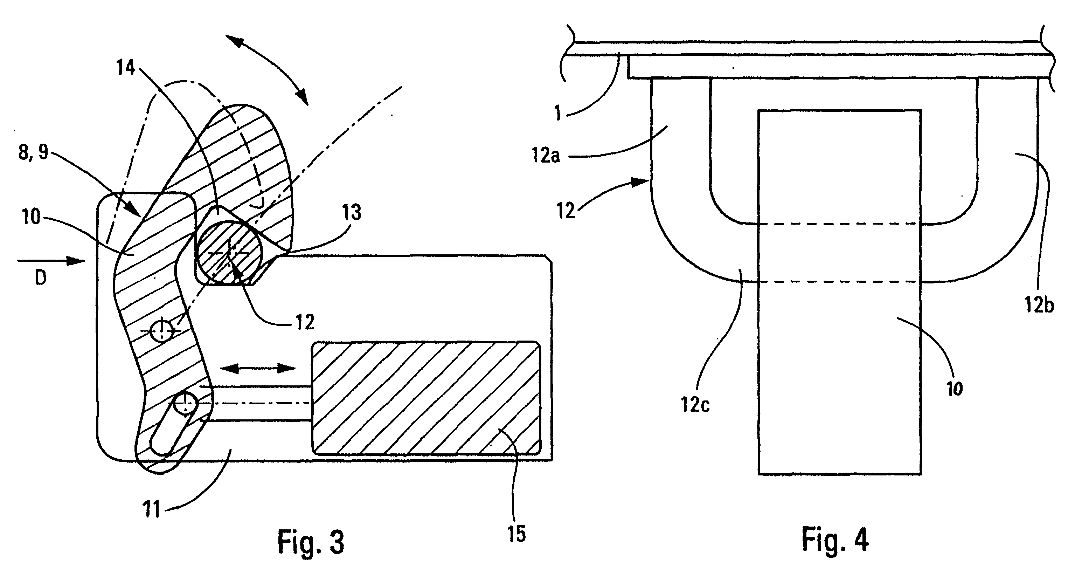

Comme indiqué sur les figures 3 et 4, chaque verrou 8, 9 comprend d'une part un crochet 10 fixé de façon articulée à un premier élément 11 solidaire de la carrosserie 6, 7 et, d'autre part, un second élément 12 solidaire de la malle 1. Le crochet 10 peut pivoter entre une première position dans laquelle il est en prise avec le second élément 12 tout en permettant la rotation de celui-ci par rapport au crochet 10 et au premier élément 11 et une seconde position dans laquelle le second élément 12 est libre par rapport au crochet 10 et au premier élément 11.

On voit sur la figure 3 que le premier élément 11 comprend une encoche 13 définissant avec le crochet 10 en position de verrouillage un logement 14 pour le second élément 12 qui permet la rotation de ce dernier.

Comme montré par la figure 4, le second élément 12 est en forme de U dont les deux branches 12a, 12b sont fixées à la malle 1 et la partie 12c reliant les deux branches 12a, 12b du U est en prise avec le crochet lorsque celui-ci est en position de verrouillage.

Le pivotement du crochet 10 entre les première et seconde positions précitées est commandé par un actionneur 15 électrique, hydraulique ou pneumatique fixé par exemple à l'élément 11 qui peut être un boîtier.

Comme montré par la figure 1, l'ouverture de la malle 1 de l'avant vers l'arrière ou de l'arrière vers l'avant est commandée par un vérin 16 électro-hydraulique ou hydro-pneumatique fixé de façon articulée d'une part à la malle 1 et d'autre part à une partie de la carrosserie adjacente au fond 17 du coffre 3.

On va maintenant expliquer le fonctionnement de la malle que l'on vient de décrire.

Pour avoir accès au coffre 3 du véhicule par l'arrière, on commande l'ouverture des verrous inférieurs arrière 9 par un bouton-poussoir standard 18 situé dans l'axe de la malle 1. Ce bouton-poussoir 18 commande l'actionneur électrique 15 du verrou 9 mais peut également commander, par un système mécanique approprié, manuellement ce verrou.

Dans ce cas, les verrous supérieurs avant 8 sont bloqués et l'élément 12 fixé à la malle 1 pivote dans le logement 14 formé par l'élément 11 et le crochet 10.

Le vérin électrique 16 (en version assistée) pousse dans la malle 1 vers le haut qui s'ouvre de l'arrière vers l'avant.

Pour replier le toit 2 à l'intérieur du coffre 3, les mouvements s'inversent. Un bouton situé à l'intérieur du véhicule commande l'ouverture des verrous supérieurs avant 8.

Dans ce cas, les verrous inférieurs arrière 9 sont bloqués et l'élément 12 de la malle 1 pivote dans le logement 14 formé par l'élément 11 et le crochet 10.

Le vérin électrique 16 (en version assistée) pousse alors la malle 1 vers le haut qui s'ouvre alors de l'avant vers l'arrière.

Dans les deux cas de figure, les mouvements s'inversent pour la fermeture de la malle.

Dans les deux cas d'ouverture et fermeture, les verrous électriques, en cas de commande non assistée, peuvent être remplacés par des verrous standards commandés par câble. Dans ce cas les vérins sont de simples équilibreurs.

Bien entendu, l'invention n'est pas limitée à l'exemple que l'on vient de décrire et on peut apporter à celui-ci de nombreuses modifications sans sortir du cadre de l'invention telle que revendiquée.

## Revendications

1. Malle arrière (1) pour véhicule découvrable à toit repliable (2) comprenant des moyens pour ouvrir la malle (1) permettant, d'une part, le passage et le rangement du toit replié (2) à l'intérieur du coffre arrière (3) et, d'autre part, un accès du coffre par l'arrière pour le rangement de bagages, **caractérisée en ce que** le bord avant (4) de la malle (1) et le bord arrière (5) de cette dernière sont reliés à la carrosserie (6, 7) du véhicule au moyen de verrous (8, 9) ayant chacun pour fonction le verrouillage et l'articulation de la malle (1) de façon que celle-ci puisse s'ouvrir soit de l'avant vers l'arrière, soit de l'arrière vers l'avant.

2. Malle arrière conforme à la revendication 1, **caractérisée en ce que** le bord avant (4) et le bord arrière (5) sont chacun reliés à la carrosserie (6, 7) au moyen d'une paire de verrous (8, 9) espacés, l'une des paires de verrous constituant une articulation en position de verrouillage, tandis que l'autre paire de verrous est en position de déverrouillage et vice versa.

3. Malle arrière conforme à l'une des revendications 1 ou 2, **caractérisée en ce que** chaque verrou (8, 9) comprend, d'une part, un crochet (10) fixé de façon articulée à un premier élément (11) solidaire de la carrosserie et, d'autre part, un second élément (12) solidaire de la malle (1), ledit crochet (10) pouvant pivoter entre une première position, dite position de verrouillage, dans laquelle il est en prise avec ledit second élément (12) tout en permettant la rotation de celui-ci par rapport au crochet (10) et audit premier élément (11) et une seconde position, dite position de déverrouillage, dans laquelle ledit second élément (12) est libre par rapport au crochet (10) et audit premier élément (11).

4. Malle arrière conforme à la revendication 3, **caractérisée en ce que** ledit premier élément (11) comprend une encoche (13) définissant, avec le crochet (10) en position de verrouillage, un logement (14) pour ledit second élément (12) qui permet la rotation de ce dernier.

5. Malle arrière conforme à l'une des revendications 3 ou 4, **caractérisée en ce que** ledit second élément (12) est en forme de U dont les deux branches (12a, 12b) sont fixées à la malle (1) et la partie (12c) reliant les deux branches du U étant en prise avec ledit crochet (10) lorsque celui-ci est en position de verrouillage.

6. Malle arrière conforme à l'une des revendications 3 à 5, **caractérisée en ce que** le pivotement du crochet (10) entre lesdites première et seconde positions, est commandé par un actionneur (15) électrique, hydraulique ou pneumatique.

7. Malle arrière conforme à l'une des revendications 1 à 6, **caractérisée en ce que** l'ouverture de la malle (1) de l'avant vers l'arrière ou de l'arrière vers l'avant, est commandée par un vérin (16) électro-hydraulique ou hydro-pneumatique fixé de façon articulée, d'une part, à la malle (1) et, d'autre part, à une partie de la carrosserie adjacente au fond (17) du coffre (3).

## Patentansprüche

1. Hinterkofferraumdeckel (1) für ein Cabrio-Fahrzeug mit zusammenfaltbarem Dach (2) mit Vorrichtungen zum Öffnen des Kofferraumdeckels (1), welche einerseits den Durchlass und die Anordnung des gefalteten Dachs (2) im Inneren des hinteren Kofferraumes (3), und andererseits einen Zugang zu dem Kofferraum von hinten für die Unterbringung von Gepäck ermöglichen, **dadurch gekennzeichnet, dass** die Vorderkante (4) des Kofferraumdeckels (1) und die Hinterkante (5) dieses letzteren mit der Karosserie (6, 7) des Fahrzeugs mittels Riegeln (8, 9) verbunden sind, welche jeweils die Funktion der Verriegelung und der gelenkigen Anbringung des Kofferraumdeckels (1) derart erfüllen, dass dieser sowohl von vorne nach hinten als auch von hinten nach vorne geöffnet werden kann.

2. Hinterkofferraumdeckel gemäß Anspruch 1, **dadurch gekennzeichnet, dass** die Vorderkante (4) und die Hinterkante (5) jeweils mit der Karosserie (6, 7) mittels eines Paares voneinander beabstandeter Riegel (8, 9) verbunden sind, wobei eines der Riegelpaare eine Gelenkverbindung in der Verriegelungsposition bildet, während das andere Riegelpaar sich in der Entriegelungsposition befindet, und umgekehrt.

3. Hinterkofferraumdeckel gemäß einem der Ansprüche 1 oder 2, **dadurch gekennzeichnet, dass** jeder Riegel (8, 9) einerseits einen Haken (10), der gelenkig an einem ersten, einstückig mit der Karosserie ausgebildeten Element (11) befestigt ist, und andererseits ein zweites, einstückig mit dem Kofferraumdeckel 1 ausgebildetes Element (12) aufweist, wobei der Haken (10) zwischen einer ersten Position, der sogenannten Verriegelungsposition, in welcher er sich im Eingriff mit dem zweiten Element (12) befindet, wodurch er dessen Drehung bezüglich des Hakens (10) und des ersten Elementes (11) ermöglicht, und einer zweiten Position, der sogenannten Entriegelungsposition, in welcher das zweite Element (12) frei bezüglich des Hakens (10) und des ersten Elementes (11) ist, schwenken kann.

4. Hinterkofferraumdeckel gemäß Anspruch 3, **dadurch gekennzeichnet, dass** das erste Element (11) eine Aussparung (13) aufweist, welche mit dem Haken (10) in der Verriegelungsposition eine Aufnahme (14) für das zweite Element (12) definiert, welche die Drehung dieses letzteren ermöglicht.

5. Hinterkofferraumdeckel gemäß einem der Ansprüche 3 oder 4, **dadurch gekennzeichnet, dass** das zweite Element (12) die Form eines U aufweist, dessen beiden Schenkel (12a, 12b) an dem Kofferraumdeckel (1) befestigt sind, und der Teil (12c), welcher die beiden Schenkel des U verbindet, im Eingriff mit dem Haken (10) ist, wenn sich dieser in der Verriegelungsposition befindet.

6. Hinterkofferraumdeckel gemäß einem der Ansprüche 3 bis 5, **dadurch gekennzeichnet, dass** das Schwenken des Hakens (10) zwischen der ersten und zweiten Position von einem elektrischen, hydraulischen oder pneumatischen Stellglied (15) gesteuert wird.

7. Hinterkofferraumdeckel gemäß einem der Anspruche 1 bis 6, **dadurch gekennzeichnet, dass** das Öffnen des Kofferraumdeckels (1) von vorne nach hinten oder von hinten nach vorne von einem von einem elektro-hydraulischen oder hydro-pneumatischen Stellantrieb (16) gesteuert wird, der gelenkig einerseits an dem Kofferraumdeckel (1) und andererseits an einem Teil der an den Boden (17) des Kofferraumes (3) angrenzenden Karosserie befestigt ist.

## Claims

1. Rear boot lid (1) for a convertible vehicle with a folding roof (2), comprising means for opening the boot lid (1), on the one hand allowing the folded roof (2) to move into the rear boot (3) and be stowed therein and, on the other hand, allowing access to the boot from the rear for stowing luggage, **characterized in that** the front edge (4) of the boot lid (1) and the rear edge (5) of the latter are linked to the bodywork (6, 7) of the vehicle by means of latches (8, 9) each having the function of locking and articulating the boot lid (1) in such a way that the latter can be opened either from the front towards the rear or from the rear towards the front.

2. Rear boot lid according to Claim 1, **characterized in that** the front edge (4) and the rear edge (5) are each linked to the bodywork (6, 7) by means of a pair of latches (8, 9) disposed at a distance from one another, one of the pairs of latches constituting an articulation in the locking position, whilst the other pair of latches is in the unlocking position, and vice versa.

3. Rear boot lid according to one of Claims 1 or 2, **characterized in that** each latch (8, 9) comprises, on the one hand, a hook (10) fixed in an articulated manner to a first element (11) which is integral with the bodywork and, on the other hand, a second element (12) which is integral with the boot lid (1), said hook (10) being capable of pivoting between a first position, the so-called locking position, in which it is engaged with said second element (12) whilst allowing this to rotate in relation to the hook (10) and said first element (11), and a second position, the so-called unlocking position, in which said second element (12) is free in relation to the hook (10) and said first element (11).

4. Rear boot lid according to Claim 3, **characterized in that** said first element (11) includes a notch (13) defining, with the hook (10) in the locking position, seating (14) for said second element (12) which allows rotation of the latter.

5. Rear boot lid according to one of Claims 3 or 4, **characterized in that** said second element (12) is in the form of a U, of which the two branches (12a, 12b) are fixed to the boot lid (1), the portion (12c) linking the two branches of the U being engaged with said hook (10) when the latter is in the locking position.

6. Rear boot lid according to one of Claims 3 to 5, **characterized in that** the pivoting of the hook (10) between said first and second positions, is controlled by an electric, hydraulic or pneumatic actuator (15).

7. Rear boot lid according to one of Claims 1 to 6, **characterized in that** the opening of the boot lid (1), from the front towards the rear or from the rear towards the front, is controlled by an electrohydraulic or hydropneumatic jack (16) fixed in an articulated manner, on the one hand, to the boot lid (1) and, on the other hand, to a portion of the bodywork adjacent to the bottom (17) of the boot (3).
